# EUROPEAN PATENT APPLICATION

(11) **EP 4 105 744 A1**
(43) Date of publication of application: **21.12.2022**
(21) Application number: 21898252.8
(22) Date of filing: 08.06.2021
(51) Int. Cl.: G05B 19/05, G05B 23/02, F21Y 115/10

(54) **PLC FOR PROVIDING SPACE-EFFICIENT INPUT/OUTPUT INTERFACE**

(30) Priority: 30.11.2020 KR 20200164565
(71) Applicant: Ilpum Corp., Gunpo-si, Gyeonggi-do 15841 (KR)
(72) Inventor: KANG, Zeajong, Pyeongchang-gun, Gangwon-do 25335 (KR)
(74) Representative: Glawe, Delfs, Moll
(86) International application number: PCT/KR2021/007110
(87) International publication number: WO 2022/114423

(57) **Abstract**

A PLC according to an embodiment of the present invention is disclosed. The PLC according to an embodiment of the present invention comprises: a master unit; and a plurality of interface units which access the master unit via a system bus. The master unit includes: a control unit for controlling input/output and processing commands; and a plurality of first RJ45 terminals for input/output of data, wherein a maximum of eight signals are arranged via each pin of each of the first RJ45 terminals. Each of the interface units includes a connection means for connecting a signal between a second RJ45 terminal for connecting a signal line from each of the first RJ45 terminals and an external device, wherein the interface units are configured to be expandable by the number of the first RJ45 terminals.

## Description

### [TECHNICAL FIELD]

The present disclosure relates to a programmable logic controller (PLC), and more particularly, to a PLC for providing a space-efficient input/output interface.

### [BACKGROUND ART]

A programmable logic controller (PLC), which is a controller for use in industrial plants or the like for automatic control and monitoring, sequentially processes signals from external equipment in accordance with an input programming logic and controls external devices based on the output.

In an automatic control system, a central processing unit (CPU) module and an input/output module play a key role for a PLC control panel, but a power supply unit and a terminal block occupy most of the space. A conventional PLC uses a terminal block or a header socket as a terminal. However, due to a spatial limitation imposed by the size of the terminal, or the complexity of wiring, it is difficult to expand or maintain input/output and to readily respond to problems in the equipment.

### [DISCLOSURE]

### [Technical Problems]

To address the aforementioned problems, exemplary embodiments of the present invention provide a programmable logic controller (PLC) having a simple wiring and a space-efficient input/output interface.

Exemplary embodiments of the present invention also provide a master unit of a PLC having a simple wiring and a space-efficient input/output interface.

Exemplary embodiments of the present invention also provide an interface unit of a PLC having a simple wiring and a space-efficient input/output interface.

### [Technical Solutions]

The present invention for solving the above object provides a PLC comprising a master unit and a plurality of interface units connected to the master unit through a system bus. The master unit includes a control unit for controlling an input/output and processing a commands and a plurality of first RJ45 terminals for input/output of data, and a maximum of eight signals are arranged through each pin of each of the first RJ45 terminals, and the interface unit includes a second RJ45 terminal for connecting a signal line from the first RJ45 terminal and a connection means for connecting a signal with an external device, and the interface unit provides a PLC that is expandable by the number of the first RJ45 terminals.

The present invention for solving the another above object provides a master unit of a PLC for connection via at least one interface unit and a system bus comprises a control unit for controlling an input/output and processing a command and at least one first RJ45 terminal for input/output of data, a maximum of eight signals are arranged through each pin of each of the first RJ45 terminals, and a signal line is connected through a connection between the first RJ45 terminal and a second RJ45 terminal included in the interface unit, the interface unit is connected as many as the number of the first RJ45 terminal.

The present invention for solving the other above object provides an interface unit for connecting to the master unit of the PLC of claim 7 through a system bus comprises a second RJ45 terminal for connecting a signal line from a first RJ45 terminal of the master unit and a connection means for connecting a signal with an external device, according to a configuration of the master unit, the interface unit has a seperate COM terminal and connect a common signal line through a COM terminal of the master unit through the COM terminal so that a maximum of eight input/output channels are configured through the second RJ45 terminal, connects a common signal line through a specific pin of the first RJ45 terminal through a specific pin of the second RJ45 terminal so that a maximum of seven input/output channels are configured through the second RJ45 terminal.

The PLC of the present invention can provide a flexible input/output expansion system while uniformizing the size of the bus by using RJ45 and increasing space efficiency by simplifying wiring. In addition, if the PLC of the present invention is used, the status display LED is classified into an LED group for specifying the RJ45 terminal and an LED group for specifying the pin number of the terminal to variably designate the signal line so that it has the advantage of flexibly coping with the expansion of the input/output interface and increasing space efficiency.

### [Advantageous Effects]

According to exemplary embodiments of the present disclosure, a PLC according to the present invention can uniformize the size of buses, simplify wiring, improve the efficiency of space, and provide a flexible input/output expansion system by using RJ45. Also, the PLC of the present invention can flexibly manage the expansion of input/output and enhance the efficiency of space by varying designated signal lines through the grouping of status display LEDs.

### [BRIEF DESCRIPTION OF DRAWINGS]

FIG. 1 is a block diagram illustrating the configuration of a PLC according to an embodiment of the present invention.
FIG. 2 is a block diagram illustrating an exemplary common signal line of the PLC according to an embodiment of the present invention.
FIG. 3 is a block diagram illustrating another exemplary common signal line of the PLC according to an embodiment of the present invention.
FIG. 4 is a block diagram illustrating the configuration of status display LEDs of the PLC according to an embodiment of the present invention.

### [BEST MODES FOR CARRYING OUT THE INVENTION]

While the present disclosure is susceptible to various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the prevent disclosure. Like reference numerals refer to like elements throughout the description of the figures.

It will be understood that, although the terms first, second, A, B, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the prevent disclosure. As used herein, the singular forms are intended to include the plural forms as well, unless the context clearly indicates otherwise. It will be further understood that the terms "comprises" and/or "comprising" and "includes" and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, various embodiments of the present disclosure will be described with reference to the attached drawings.

As will be described later, a programmable logic controller (PLC) according to the present invention may refer to a typical PLC for use in industries, including a central processing unit (CPU), which mainly consists of a microprocessor and a memory and performs the functions of the human brain, an input/output unit, which connects signals to an external device, a power supply unit, which supplies power to each unit of the PLC, and a peripheral device, which records programs in the memory of the PLC. The PLC according to the present invention may also refer to a CPU module, an input/output module (e.g., a digital input (DI) module, a digital output (DO) module, an analog input (AI) module, an analog output (AO) module, a hybrid module, etc.), a special function module, or the like.

Accordingly, a master unit of the PLC according to the present invention, which will hereinafter be described, may refer to a unit in which a CPU or a microprocessor unit (MPU) exclusively for a PLC is installed and a read-only memory (ROM) having a system program stored therein is embedded to provide the functions of processing commands and controlling input/output by interpreting the program stored in the memory. Also, an interface unit of the PLC according to the present invention may be a unit that is configured to be physically separate from the master unit and to be connected to the master unit through RJ45 and includes connection means (e.g., a terminal unit such as a terminal block connecting input/output signal lines from the outside) for exchanging signals with an external device. The interface unit may be configured by a user for various inputs/outputs such as DI, DO, AI, or AO.

Also, an RJ45 terminal to be mentioned below may refer to a socket capable of connecting an RJ45 connector having 8 slots and 8 contact parts. An RJ45 cable (or an Ethernet cable) may refer to a cable having RJ45 connectors on both sides thereof and having 8 signal lines therein. The connection of the master unit and the interface unit through the RJ45 terminal may mean the direction connection of the terminals of both the master unit and the interface unit through the connectors of the RJ45 cable.

General descriptions of the elements of a PLC that are already well known will be omitted, and only parts of the PLC that are essential for the understanding of the configuration of the present invention may be described in detail.

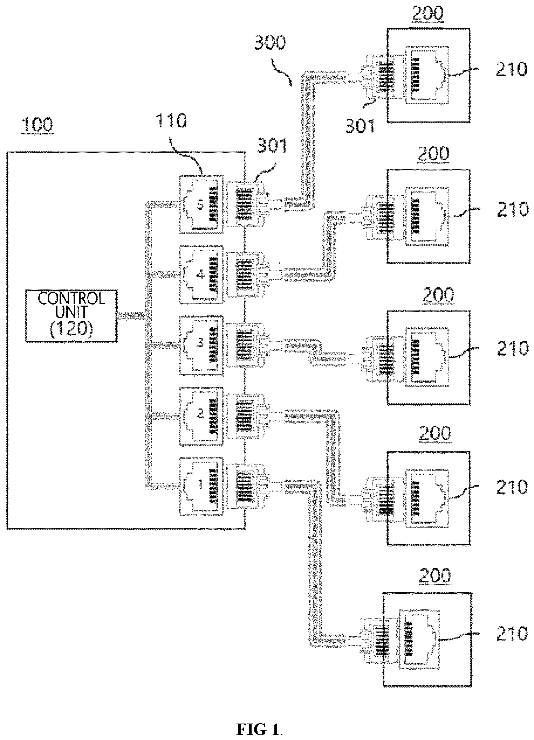

FIG. 1 is a block diagram illustrating the configuration of a PLC according to an embodiment of the present invention.

Referring to FIG. 1, the PLC may be configured to include a master unit 100 and a plurality of interface units 200, which are configured to be connected to the master unit 100 through system buses. Here, the system buses may refer to paths that allow hardware devices or components to communicate with one another. The master unit 100 may be configured to include a control unit 120, which is for controlling input/output and processing commands, and a plurality of first RJ45 terminals 110, which are for the input/output of data. Here, the control unit 120 may be a component that performs functions including the role of a CPU (or MPU).

Also, each of the interface units 200 may be configured to include a second RJ45 terminal 210, which is for connecting signal lines from one of the first RJ45 terminals 110 of the master unit 100. Each of the interface units 200 may further include connection means (not illustrated) for exchanging signals with an external device. For example, each of the interface units 200 may include a terminal (e.g., a terminal block) for coupling input/output signal lines from the outside. Each of the interface units 200 may further include components (e.g., relays, etc.) that are necessary depending on the type of signal line.

Data is transmitted between the master unit 100 and the interface units 200 by connecting cables 300 (e.g., Ethernet cables) through RJ45 terminals (110 and 210).

Thus, a maximum of eight signals may be arranged using every (eight) pins of each of he first RJ45 terminals 110. Also, the interface units 200 can be expanded by as many as the number of first RJ45 terminals 110. For example, in a case where five first RJ45 terminals 110 are arranged in the master unit 100, as illustrated in FIG. 1, five interface units 200 can be connected through the connection of the RJ45 terminals (110 and 210), and a maximum of eight signal lines can be connected for each of the interface units 200. Also, each of the interface units 200 may be equipped with elements that are necessary depending on the type of signal line, such as, for example, eight relays (in the case of configuring an 8-channel digital output) and a terminal block for input/output from the outside.

That is, by connecting the RJ45 terminals (110 and 210) via the RJ45 cables 300 and RJ45 connectors 301, space occupied by the terminals can be saved, wiring can be simplified to increase the efficiency of space, and a consistent input/output expansion system can be configured. Here, the layout of RJ45 signal lines according to the present invention is for the transmission of input/output signals and is not particularly limited by a wiring method for Ethernet communication.

Meanwhile, the eight pins of each of the first RJ45 terminals 110 of the master unit 100 may all be used for the same type of signals or for various types of signals (e.g., DI, DO, Ai, AO, UI, and the like). All the pins of each of the first RJ45 terminals 110, except for a pin for use as a common signal line, may be used for the same type of signals, and signals may be arranged in the same order as the order of pin numbers. For example, DI, DO, AI, AO, and universal input (UI) may be arranged for first, second, third, fourth, and fifth first RJ45 terminals 110, respectively, and the efficiency and the convenience of use of the configuration can be improved by arranging the same type of signals for each of the first RJ45 terminals 110 and arranging signals in the same order as the order of the pin numbers of a corresponding interface unit 200.

The configuration of an exemplary common signal line of the PLC according to an embodiment of the present invention will hereinafter be described.

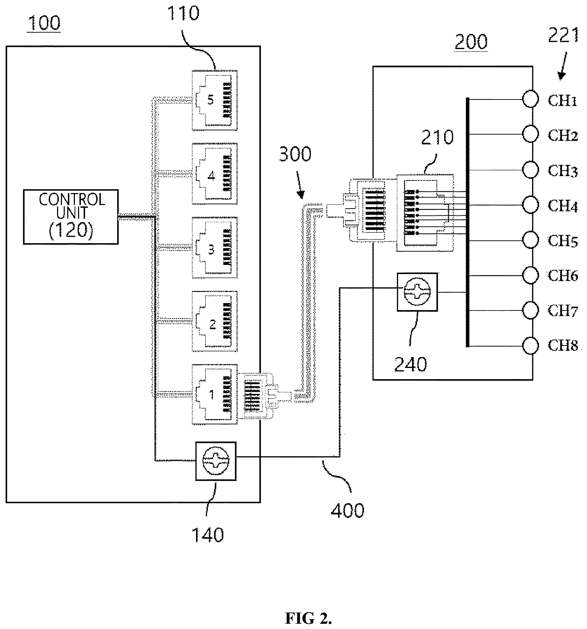

FIG. 2 is a block diagram illustrating an exemplary common signal line of the PLC according to an embodiment of the present invention.

Referring to FIG. 2, the master unit 100 of the PLC according to an embodiment of the present invention may include a COM terminal 140, which is for allocating a common signal that is used in common by the 8-pin signal lines of each of the first RJ45 terminals 110. A common signal line allocated to the COM terminal 140 may be connected to a COM terminal 240, which is included in an interface unit 200, via a separate cable 400. Thus, the eight pins of each of RJ45 terminals 110 and 210 may all be used as input/output signal lines, and as a result, a maximum of eight input/output channels 221 can be configured in the interface unit 200. Here, the COM terminal 140 may refer to a typical terminal configured to have multiple lines connected thereto.

That is, for example, in a case where the eight pins of the first terminal 110 are all used for DI and a common signal is allocated to the separate terminal 140, as illustrated in FIG. the efficiency of space can be improved by configuring 8-channel DI 221 in the interface unit 200. The common signal line may be expanded and connected by connecting COM terminals 240 of neighboring interface units.

The configuration of another exemplary common signal line of the PLC according to an embodiment of the present invention will hereinafter be described.

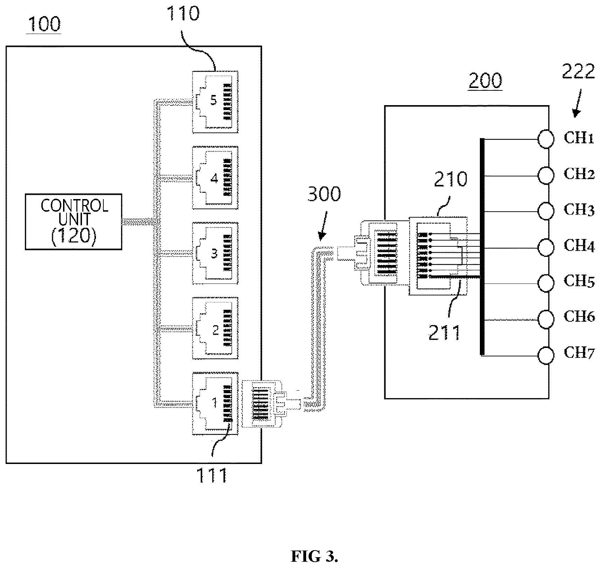

FIG. 3 is a block diagram illustrating another exemplary common signal line of the PLC according to an embodiment of the present invention.

Referring to FIG. 3, the master unit 100 of the PLC according to an embodiment of the present invention may use a particular pin 111, among the eight pins of a first RJ45 terminal 110, as a common signal line, and the common signal line may be configured to be connected to a corresponding pin 211 of a second RJ45 terminal 210 of an interface unit 200. Accordingly, the other seven pins of each of the first and second RJ45 terminals 110 and 210 may be used as input/output signal lines, and as a result, a maximum of seven input/output channels 22 can be configured for each interface unit 200.

That is, for example, in a case where a first pin 111 of the first terminal is used as the common signal line and the other seven pins are all used for DI, 7-channel DI 222 can be configured based on all the pins of the interface unit 200, except for a first pin 211. Accordingly, as no separate terminal is needed for the common signal line, wiring can be further simplified, as compared to the example of FIG. 2.

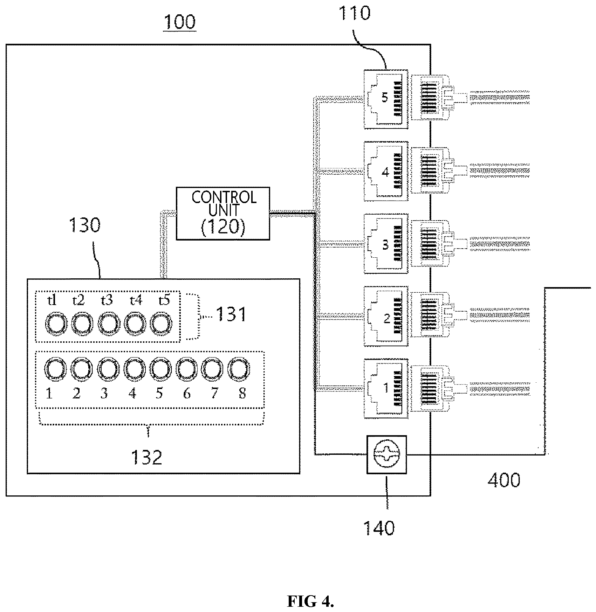

FIG. 4 is a block diagram illustrating the configuration of status display LEDs of the PLC according to an embodiment of the present invention.

Referring to FIG. 4, the master unit 100 of the PLC according to an embodiment of the present invention may further include a plurality of status display LEDs 130. The status display LEDs 130 may be divided into a first LED group 131 for designating a first RJ45 terminal 110 that a target signal line to be displayed belongs to and a second LED group 132 for designating the pin number of the first RJ45 terminal 110 including the target signal line. Thus, the control unit 120 may display the status of the signal lines of each of the first RJ45 terminals 110 via predefined LEDs from the first and second LED groups 111 and 112 at predetermined intervals.

Here, the first LED group 131 may include at least as many LEDs as there are first RJ45 terminals 110 in the master unit 110, and the second LED group 132 may include a number of LEDs corresponding to the number of pins of each of the first RJ45 terminals 110, i.e., eight LEDs.

For example, as illustrated in FIG. 4, the control unit 120 may output the status of a signal line of a second pin of the third terminal 110 via an LED t3 of the first LED group 131 and an LED 2 of the second LED group 132. Reference numerals used in the accompanying drawings are merely exemplary for the understanding of the present invention and are not intended to limit the present invention.

In the case of a conventional PLC, the targets of status display LEDs are fixed in advance. On the contrary, in the case of the PLC according to the present invention, the targets of the status display LEDs 130 can be varied by dividing the status display LEDs 130 into groups. Accordingly, the efficiency of space can be improved, and a flexible expansion of input/output channels can be secured.

Meanwhile, a status display LED 140 may display the status of signal lines in accordance with a set of conditions set in the PLC, and the types of signals that can be displayed by the status display LED 140 may include DI, DO, AI, AO, UI, and the like. For Ai, AO, and UI, the control unit 120 may output the status of signal lines to the status display LED 140 by applying a predefined threshold value to each type of signals.

For example, in a case where a threshold voltage is set to 3 V, an LED t2 of the first LED group 131 and the LED 2 of the second LED group 132 may be turned on in response to a voltage of 3.1 V being applied thereto via a third channel of the interface unit 200 connected to the second first RJ45 terminal 110, which is configured to be used for AI, and may be turned off in response to a voltage of 2.9 V being applied thereto. This type of function can be useful for establishing or maintaining an automatic control system.

The PLC of the present invention can uniformize the size of buses, simplify wiring, improve the efficiency of space, and provide a flexible input/output expansion system by using RJ45. Also, the PLC of the present invention can flexibly manage the expansion of input/output and enhance the efficiency of space by varying designated signal lines through the grouping of status display LEDs.

Although the present invention has been described with reference to preferred embodiments thereof, it will be understood that various modifications and changes can be made by one of ordinary skill in the art, without departing from the spirit and scope of the invention described in the claims below.

## Claims

1. A PLC comprising:
a master unit and a plurality of interface units, which are connected to the master unit through system buses,
wherein
the master unit includes a control unit, which is for controlling input/output and processing commands, and a plurality of first RJ45 terminals, which are for the input/output of data, and is configured to arrange a maximum of eight signals via each pin of each of the first RJ45 terminals,
each of the interface units includes a second RJ45 terminal, which is for connecting signal lines from one of the first RJ45 terminals, and connection means, which is for connecting signals from an external device, and
the interface units can be expanded by as many as the number of first RJ45 terminals.

2. The PLC of claim 1, wherein all eight pins of each of the first RJ45 terminals of the master unit, except for a common signal line, are used as the same type of signal lines and are arranged in the same order as the order of pin numbers.

3. The PLC of claim 1, wherein
the master unit includes a separate COM terminal, which is a common signal line used in common by all the signal lines of each of the first RJ45 terminals, and
the common signal line is connected to COM terminals included in the interface units such that each of the interface units configures a maximum of eight input/output channels via the second RJ45 terminal.

4. The PLC of claim 1, wherein
the master unit uses a particular pin among eight pins of each of the first RJ45 terminals as a common signal line, and
the common signal line is connected via a pin of the second RJ45 terminal corresponding to the particular pin such that each of the interface units configures a maximum of seven input/output channels via the second RJ45 terminal.

5. The PLC of claim 1, wherein
the master unit further includes a plurality of status display light-emitting diodes (LEDs) for displaying the status of signal lines,
the status display LEDs are divided into a first LED group including a number of LEDs corresponding to the number of first RJ45 terminals to designate a first RJ45 terminal that a target signal line to be displayed belongs to and a second LED group including a number of LEDs corresponding to the number of pins of each of the first RJ45 terminals to designate a pin number of the first RJ45 terminal including the target signal line, and
the status of signal lines of each of the first RJ45 terminals is configured to be output via predefined LEDs from the first and second LED groups at predetermined intervals.

6. The PLC of claim 5, wherein for analog input, analog output, and universal input, a predefined threshold value is applied to each type of signals, and the status of the signal lines is output to the status display LEDs based on the threshold value.

7. A master unit of a PLC for being connected to one or more interface units via system buses, comprising:
a control unit for controlling input/output and processing commands; and
a plurality of first RJ45 terminals for the input/output of data,
wherein a maximum of eight signals are arranged via each pin of each of the first RJ45 terminals,
signal lines are connected by connecting the first RJ45 terminals and second RJ45 terminals included in the interface units, and
as many interface units as there are first RJ45 terminals are connected.

8. The master unit of claim 7, wherein
the master unit includes a separate COM terminal, which is a common signal line used in common by all the signal lines of each of the first RJ45 terminals, such that the common signal line is either connected to COM terminals included in the interface units via the COM terminal of the master unit, or
the master unit uses a particular pin among eight pins of each of the first RJ45 terminals as the common signal line such that the common signal line is connected via pins of the second RJ45 terminals corresponding to the particular pin.

9. The master unit of claim 7, wherein
the master unit further includes a plurality of status display light-emitting diodes (LEDs) for displaying the status of signal lines,
the status display LEDs are divided into a first LED group including a number of LEDs corresponding to the number of first RJ45 terminals to designate a first RJ45 terminal that a target signal line to be displayed belongs to and a second LED group including a number of LEDs corresponding to the number of pins of each of the first RJ45 terminals to designate a pin number of the first RJ45 terminal including the target signal line, and
the status of signal lines of each of the first RJ45 terminals is configured to be output via predefined LEDs from the first and second LED groups at predetermined intervals.

10. An interface unit for being connected to the master unit of the PLC of claim 7 via a system bus, comprising:
a second RJ45 terminal for connecting signal lines from a first RJ45 terminal of the master unit and connection means for connecting signals from an external device,
wherein depending on the configuration of the master unit, the interface unit either includes a separate COM terminal and connects a common signal line via the separate COM terminal and a COM terminal of the master unit such that a maximum of eight input/output channels are configured via the second RJ45 terminal, or connects the common signal line via particular pins of the first and second RJ45 terminals such that a maximum of seven input/output channels are configured via the second RJ45 terminal.
